# EUROPÄISCHE PATENTSCHRIFT

(11) **EP 1 235 505 B1**
(45) Veröffentlichungstag und Bekanntmachung des Hinweises auf die Patenterteilung: **25.06.2003**
(21) Anmeldenummer: 00979645.9
(22) Anmeldetag: 30.11.2000
(51) Int. Cl.: A47J 27/18

(54) **VERFAHREN UND VORRICHTUNG ZUM KOCHEN VON TEIGWAREN**
METHOD AND DEVICE FOR COOKING PASTA
PROCEDE ET DISPOSITIF DE CUISSON DE PATES ALIMENTAIRES

(30) Priorität: 03.12.1999 DE 19958346
(43) Veröffentlichungstag der Anmeldung: 04.09.2002
(73) Patentinhaber: Gate GmbH - Innovative Gastronomie Technik, 63263 Neu-Isenburg (DE)
(72) Erfinder: BODEN, Thomas, 61194 Niddatal/Kaichen (DE)
(74) Vertreter: Erb, Henning
(86) Internationale Anmeldenummer: EP0012011
(87) Internationale Veröffentlichungsnummer: WO01039644

(56) Entgegenhaltungen:
- EP-A- 0 296 549
- US-A- 5 070 774
- US-A- 5 172 627

## Beschreibung

Die Erfindung betrifft ein Verfahren zum Kochen von Teigwaren in einer geeigneten Vorrichtung (vgl. Oberbegriff des Anspruchs 1) mit einer Hauptkochkammer und einer zweiten Kammer sowie je einem Verschlußelement an einem Einlaß der Hauptkochkammer, zwischen der Hauptkochkammer und der zweiten Kammer und an einem Auslaß der zweiten Kammer, wobei die Teigwaren in der Hauptkochkammer mit unter Überdruck stehendem heißen Wasser gekocht werden, anschließend in die zweite Kammer gegeben und nach dem Ablassen des Kochwassers ausgegeben werden. Ein solches Verfahren ist aus der US-A-5070774 bekannt.

Ein ähnliches Verfahren ist z. B. aus der EP 0 802 753 B1 bekannt, bei welcher nach dem Öffnen der Klappe zwischen den beiden Kammern sofort der Druck abgebaut wird und das heiße Wasser aus der zweiten Kammer mit Hilfe einer Saugpumpe abgezogen wird. Die Teigwaren verweilten darauf drucklos in der zweiten Kammer. Es hat sich gezeigt, daß das Ablassen des Kochwassers bei dem dort beschriebenen Verfahrensablauf nicht immer einwandfrei funktioniert. So geschah es des öfteren, daß Reste der Teigwaren die Auslaßleitung der Abkühlkammer verstopften und/oder das Kochwasser aufgrund der darin befindlichen Proteine aufschäumte, so daß die Pumpe nicht einwandfrei arbeiten konnte. Das zum Abkühlen vorgesehene Frischwasser vermischt sich dann mit dem heißen Kochwasser, und es besteht die Gefahr, daß beim Öffnen des Auslasses der Abkühlkammer die Teigwaren zusammen mit dem heißen Kochwasser ausgegeben werden und man sich verbrennt. In jedem Fall ist das mit den Teigwaren ausgegebene Kochwasser unappetitlich, und die ausgegebene Teigwarenportion ist zum Verzehr nicht geeignet.

Die Aufgabe der Erfindung besteht darin, ein Verfahren zu schaffen, bei welchem das Ablassen des Kochwassers zuverlässig erfolgt und die Dauer der Kochzyklen reduziert sind.

Erfindungsgemäß wird diese Aufgabe durch ein Verfahren gemäß Anspruch 1 gelöst.

Mit Hilfe des sich in der Nachkochkammer einstellenden Überdruckes ist es möglich, den Ablaßvorgang des Kochwassers zu beschleunigen und Verstopfungen der Ablaßleitungen zu verhindern. Eine eventuell zusätzlich vorhandene Absaugpumpe wird unterstützt und die Gefahr eines Aufschäumens des Kochwassers durch die aus den Teigwaren ausgeschiedenen Proteine sowie die damit verbundene Blockade des Abwasserweges wird verhindert.

Der schnellere Ablaßvorgang erlaubt eine Verkürzung der Kochzyklen. Von besonderem Vorteil ist in diesem Zusammenhang auch, daß nach dem Öffnen des Verschlußelements zwischen den Kammern zunächst noch ein relativ hoher Druck bei hoher Temperatur des Kochwassers vorliegt und somit ein schonendes, aber effizientes "Nachkochen" der Teigwaren in der Nachkochkammer erfolgt. Zum Erreichen eines gleichwertigen Kochergebnisses das Verschiußelement zwischen den Kammern daher früher geöffnet werden kann.

Eine besonders vorteilhafte Weiterbildung des Verfahrens ist in Anspruch 3 beschrieben. Auf diese Weise läßt sich der Wirkungsgrad des Verfahrens verbessern, wobei der in der Nachkochkammer vorherrschende Druck es erlaubt, das Kochwasser ohne Verstopfungsgefahr durch die Kanäle des Wärmetauschers strömen zu lassen.

Eine weitere Verbesserung des Verfahrens betrifft das zwischen der Hauptkoch- und der Nachkochkammer angeordnete Verschlußelement, das mit Hilfe eines Antriebes verschließbar ist.

Die bisher üblichen Kurvengetriebe, mit Hilfe derer man auf dem letzten Wegstück des Schließvorgangs zum Erreichen eines hohen Anpreßdruckes ein großes Übersetzungsverhältnis realisieren konnte, zogen aufwendig zu fertigende Getriebeteile nach sich.

Erfindungsgemäß werden daher Verfahren gemäß den Ansprüchen 4 und 5 vorgeschlagen.

Die Kniehebelkonstruktion besteht aus wenigen, einfach zu fertigenden Teilen und erlaubt durch ihr sich konstruktionsbedingt änderndes Übersetzungsverhältnis das Erreichen eines hohen Anpreßdruckes.

Als Antrieb eignet sich ein Linearantrieb, z. B. ein elektrischer Antriebsmotor, der über einen Spindeltrieb vorzugsweise über ein Mitnehmerelement mit einer im wesentlichen senkrecht zur Stellrichtung des Spindeltriebs ausgerichteten Langnut auf den Kniehebel wirkt. Die Nut erlaubt es beispielsweise dem Gelenkbolzen des Kniegelenks, sich beim Einklappen des Kniehebels in der Nut zu bewegen.

Ein weiterer Aspekt betrifft das obere und/oder untere Verschlußelement der Vorrichtung, das mit Hilfe eines im wesentlichen quer zur Öffnung der Hauptkochkammer verfahrbaren Linearantriebes und Umlenkelementen gegen den Öffnungsrand anpreßbar ist.

Die beispielsweise in der EP 0 802 753 beschriebene Lösung besitzt den Nachteil, daß sich der Verschluß von oben auf den Öffnungsrand senkt, so daß Teigwarenreste eingeklemmt werden können und es zu Beschädigungen der empfindlichen Dichtungen und im weiteren zu einer Undichtigkeit des Überdrucksystems kommen kann. Auch aus hygienischer Sicht sind die sich im Dichtungsbereich festsetzenden Teigwarenreste bedenklich. Ein weiteres Problem besteht darin, daß sich Teigwarenreste in den Führungsschienen festsetzen und dadurch die Funktion der Vorrichtung beeinträchtigen können.

Erfindungsgemäß wird daher ein Verfahren gemäß Anspruch 6 vorgeschlagen. Durch die auf den Nutgrund gleitende Bewegung des Verschlußelements werden Reste von Teigwaren beim Öffnen und Schließen des Verschlußelements aus dem Anpreßbereich geschoben, so daß das Dichtelement gegen eine gereinigte Fläche wirken kann. Neben dem verringerten Verschleiß erhöht sich dadurch auch die Dichtwirkung beträchtlich.

Vorzugsweise sind zwei Schrägflächen an den Flanken des Verschlußelements vorgesehen, die mit in den Seitenwandungen der Nut drehbar gelagerten Rollen zusammenwirken. Hierdurch erreicht man einen besonders gleichmäßigen Anpreßdruck und mit Hilfe der drehbar gelagerten Rollen eine Verringerung der Reibungsverluste, wie sie beispielsweise bei einfachen, zusammenwirkenden Schrägflächen entstehen können.

Eine besonders bevorzugte Ausführungsform dieses erfindungsgemäßen Verfahrens ist in Anspruch 7 beschrieben. Der vorzugsweise aus Teflon bestehende Reinigungskörper, durch dessen Öffnung die Teigwaren in die Hauptkochkammer verbracht werden, sorgt für eine Reinigung der Nut und der Dichtflächen um die Öffnung der Hauptkochkammer, wobei er vorzugsweise die Teigwarenreste in eine am Ende der Nut angeordnete Auffangwanne schiebt, wo sie leicht entfernt werden können. Der Reinigungskörper ist vorzugsweise mit bestimmtem Höhenspiel beweglich zu dem Anpreßkörper angeordnet und mit Laufflächen versehen, über welche mit Hilfe der Rollen oder Rollenpaare eine definierte Anlage am Nutgrund erreichbar ist, wodurch die Reinigungswirkung verbessert wird. Durch federnd gelagerte Rollen läßt sich ein besonders genauer Anpreßdruck einstellen.

Eine Kapselung für die Rollen und die Schrägflächen mit Hilfe von bis an den Nutrand reichenden Abdeckelementen an dem Verschlußelement ist sinnvoll, damit sich in diesem Bereich keine Verschmutzungen ansammeln können.

Aus Hygienegründen ist es ferner von Vorteil, wenn die Oberseite des Verschlußelements und die Oberseiten der Nutflanken flach ausgebildet sind und fluchtend bündig miteinander abschließen. Bei einer derartigen Ausbildung läßt sich das Gerät nach der Abnahme eines zur Aufnahme der Teigwarenportionen auf der Oberseite angebrachten Magazins leicht reinigen, wobei die glatte Fläche auch sehr leicht mit Isoliermaterial verkleidet werden kann, um die Wärmeverluste der Vorrichtung gering zu halten.

Insbesondere für das Verschlußelement am Auslaß der Nachkochkammer ist vorzugsweise vorgesehen, daß dieses ein axial gegen eine Feder bewegliches Schließelement aufweist, das gegen die Öffnung anpreßbar ist, wobei beispielsweise ein Schalter vorgesehen ist, der bei einer Relativbewegung zwischen einem Druckelement, an welchem die Feder abgestützt ist, und dem Schließelement die Schließbewegung stoppt oder umkehrt.

Die Empfindlichkeit dieser Abschalteinrichtung ist durch die Dimensionierung der Feder einstellbar, wobei die zum Abschalten notwendige Betätigungskraft zum axialen Verschieben des Schließelements bezüglich des Druckelements sehr klein im Vergleich zu der von dem Druckelement auf das Schließelement ausgeübten Anpreßkraft ist.

Nachfolgend wird die Erfindung anhand der beigefügten Zeichnungen, die Ausführungsbeispiele der Erfindung darstellen, näher erläutert. Es zeigen:
- Fig. 1: ein Verfahrensschema einer Vorrichtung zum Kochen von Teigwaren;
- Fig. 2: eine schematische Draufsicht auf die Vorrichtung bei abgenommenem Magazin;
- Fig. 3: eine Schnittdarstellung des in Fig. 2 dargestellten oberen Verschlußelements der Vorrichtung;
- Fig. 4: eine Schnittdarstellung entsprechend Fig. 3 mit in einer Wartungsstellung geschwenkten Verschlußelement;
- Fig. 5: eine schematische Draufsicht ähnlich Fig. 2 der Vorrichtung mit geändertem Verschlußelement;
- Fig. 6: eine schematische geschnittene Darstellung des unteren Verschlußelements der Vorrichtung am Auslaß der Nachkochkammer;
- Fig. 7: eine schematische Schnittdarstellung der zwischen der Hauptkochkammer und der Nachkochkammer der Vorrichtung angeordneten Verschlußklappe.

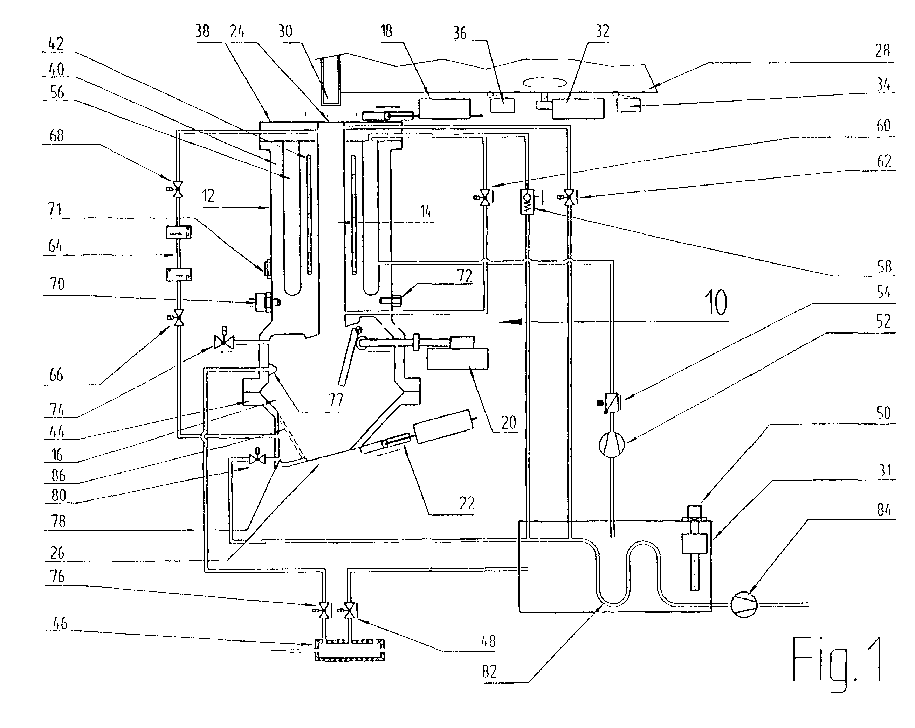

In Fig. 1 ist das Funktionsschema einer Kochvorrichtung 10 dargestellt, die im wesentlichen aus einem Druckbehälter 12, der eine Hauptkochkammer 14, eine Nachkochkammer 16 und angetriebene Verschlußelemente 18, 20, 22 an einem Einlaß 24 der Hauptkochkammer 14, zwischen der Hauptkochkammer 14 und der Nachkochkammer 16 und an einem Auslaß 26 der Nachkochkammer 16 sowie Leitungs- und Steuerungselemente zum Zuführen bzw. Ableiten des Kochwassers aufweist, einem oberhalb des Druckbehälters 12 angeordneten Magazin 28 mit mehreren Kammern 30 zur Aufnahme von Teigwarenportionen und einem Wärmetauscher 31 besteht, in welchem das verbrauchte Kochwasser Wärme an zugeführtes Frischwasser abgibt.

Auf die Funktion und den Aufbau der Verschlußelemente 18, 20, 22 wird später noch genauer eingegangen.

Das Magazin 26 ist als Karussell konzipiert und verfügt über einen elektrischen Antriebsmotor 32, mit Hilfe dessen jeweils eine Kammer 30 über dem Einlaß 24 der Hauptkochkammer 14 positionierbar ist. Die exakte Stellung der Kammern wird durch einen Positionsschalter 34 erfaßt. Das Magazin 28 kann aus der in Fig. 1 skizzierten Position entfernt werden, wobei ein Sicherheitsschalter 36 bei abgenommenem oder abgeklapptem Magazin 28 dafür sorgt, daß das aus Sicherheitsgründen deaktivierte Verschlußelement 18 den Einlaß 24 verschlossen hält. Hierdurch wird verhindert, daß bei Reinigungstätigkeiten an der Oberseite der Kochvorrichtung 10 Verunreinigungen in die Hauptkochkammer 14 fallen können oder Gefährdungen des Personals eintreten.

Der Druckbehälter 12 der Kochvorrichtung 10 ist aus Montagegründen mehrteilig aufgebaut und besteht aus einem oberen Teil 38, an welchem das obere Verschlußelement 18 montiert ist, einem mittleren Teil 40 aus Composite-Werkstoff, in welchen Heizelemente 42 zum Erwärmen des Druckbehälters 12 eingebettet sind, und einem unteren Teil 44, der nach der Montage des mittleren Verschlußelements 20 mit dem mittleren Teil verschraubt wird und die untere Hälfte der Nachkochkammer 16 bildet.

Eine Frischwasserzufuhr 46 ist über ein Ventil 48 mit dem Wärmetauscher 31 verbunden, der als Reservoir eine bestimmte Menge an Frischwasser bereit hält, wobei ein Schwimmschalter 50 im Zusammenwirken mit dem Ventil 48 für einen konstanten Wasserstand sorgt. Eine Pumpe 52 fördert bei Bedarf über ein Rückschlagventil 54 das in dem Wärmetauscher 31 vorgewärmte Frischwasser in eine Vorheizkammer 56, die in dem Mittelteil 40 des Druckbehälters 12 um die Heizelemente 42 herum oder als separater Tank ausgebildet ist. Die Vorheizkammer 56 ermöglicht es, ständig in ausreichender Menge Frischwasser auf Prozeßtemperatur bereitzuhalten, um den nachfolgenden Kochvorgang zu verkürzen. Ein Überdruckventil 58 sorgt im Falle eines unbeabsichtigten, überhöhten Druckaufbaus für Entlastung, wobei der Überdruck in den Wärmetauscher 31 entspannt wird. Zum Füllen der Hauptkochkammer 14 wird ein Füllventil 60 geöffnet, das eine Verbindung zwischen der Vorheizkammer 56 und der Hauptkochkammer 14 herstellt. Ein Entlüftungsventil 62 erlaubt ein Entweichen der durch das zugeführte Wasser verdrängten Luft und in einem anderen Funktionsfall einen Druckausgleich mit der Umgebung vor dem Öffnen des Verschlußelements 18 am Einlaß der Hauptkochkammer.

Zwischen der Hauptkochkammer 14 und der Nachkochkammer 16 ist ferner eine Verbindungsleitung 64 vorgesehen, die über Steuerventile und zwei Druckschalter einen gezielten Druckausgleich zwischen der Hauptkochkammer 14 und der Nachkochkammer 16 bei geschlossenem mittleren Verschlußelement 20 erlaubt. Mit den beiden Ventilen und Druckschaltern sind getrennte funktions- und sicherheitstechnische Druckmessungen in beiden Kammern möglich.

Ferner ist an dem mittleren Teil 40 des Druckbehälters 12 ein Temperaturschalter 70, eine Temperatursicherung 71 und ein Temperatursensor 72 vorgesehen, die mit einer elektronischen Steuerung der Vorrichtung verbunden sind und der Temperaturregelung sowie einer zweifachen Absicherung des Systems im Falle unerwarteter Betriebsbedingen dienen.

Die Nachkochkammer 16 verfügt über ein Belüftungsventil 74, mit Hilfe dessen vor dem Öffnen des unteren Verschlußelements 22 zur Ausgabe der Teigwaren der Innendruck der Nachkochkammer 16 dem Umgebungsdruck angepaßt werden kann. Ferner wird mittels eines zweiten Frischwasserventils 76 und einer nachgeschalteten Kegelsprühdüse 77 kaltes Frischwasser in die Nachkochkammer 16 zum Abschrecken und Abkühlen der gekochten Teigwaren sowie zum gezielten Reinigen der Dichtfläche des mittleren Verschlußelements 22 eingeleitet. Ein Auslaßkanal 78, der mit Hilfe eines Ablaßventils 80 geöffnet werden kann, dient dazu, das Kochwasser, das nach dem Öffnen des mittleren Verschlußelements 20 zusammen mit den Teigwaren in die Nachkochkammer 16 gelangt ist, aus dieser abzulassen. Der Auslaßkanal 78 führt mit mehreren Windungen 82 durch den Frischwasservorrat des Wärmetauscher 31, so daß das Abwasser dort, wie bereits erwähnt, seine Restwärme an das vorzuwärmende Frischwasser abgeben kann. Eine Abwasserpumpe 84 dient zur weiteren Unterstützung des Ablaßvorgangs des Abwassers. Um zu vermeiden, daß sich Teigwaren in dem Auslaßkanal 78 festsetzen können, ist in der Nachkochkammer 16 ein Sieb 86 vorgesehen, daß den Bereich der Kammer abtrennt, in welchem der Auslaßkanal 78 angeordnet ist.

Zur Zubereitung einer Portion von Teigwaren wird zunächst eine befüllte Kammer 30 über den Einlaß 24 der Hauptkochkammer 14 bewegt, woraufhin bei geschlossenem mittlerem Verschlußelement 20 das Verschlußelement 18 den Einlaß freigibt, so daß die Teigwaren in die Hauptkochkammer fallen können. Nach dem Schließen des Verschlußelements 18 wird das Füllventil 60 geöffnet und die Pumpe 52 gestartet, so daß vorgeheiztes Frischwasser aus der Vorheizkammer 56 in die mit Teigwaren befüllte Hauptkochkammer 14 strömen kann. Dabei entweicht die verdrängte Luft aus der Kammer über das Ventil 62. Dieses Ventil 62 schließt nach einer festgelegten Zeit, und die nachlaufende Pumpe 52 verdichtet die restliche, in der Kammer verbliebene Luft. Bei Erreichen eines vorgegebenen Druckes, der durch einen der beiden Druckschalter in der Verbindungsleitung detektiert wird, schaltet die Pumpe ab. Das Ventil 68 ist während dieser Phase geöffnet, das Ventil 66 geschlossen. Damit sind die gewünschten Prozeßparameter Temperatur und Druck erreicht.

Während des anschließenden Kochvorgangs wird die Temperatur durch die Heizelemente 42 in der Hauptkochkammer 14 und der Vorheizkammer 56 nachgeführt.

Nach einer festgelegten Kochdauer wird mit Hilfe des Steuerventils 66 bei noch geöffnetem Ventil 68 der Verbindungskanal 64 geöffnet, so daß ein Druckausgleich zwischen der Hauptkochkammer 14 und der Nachkochkammer 16 erfolgt. Im Anschluß daran öffnet das mittlere Verschlußelement 20, und die Teigwaren und das Kochwasser gelangen in die Nachkochkammer 16, deren Auslaß 26 durch das untere Verschlußelement 22 verschlossen ist. Sobald die Hauptkochkammer 14 entleert ist, schließt das mittlere Verschlußelement 20, woraufhin sich ein erneuter Kochzyklus in der Hauptkochkammer 14 unmittelbar anschließen kann.

In der Nachkochkammer 16 wird der fortbestehende Überdruck ausgenutzt, um nach dem Öffnen des Ablaßventils 80 das Kochwasser, das bis zu diesem Zeitpunkt für einen Nachkocheffekt sorgt, durch den Auslaßkanal 78 über den Wärmetauscher 31 aus der Nachkochkammer 16 zu treiben. Eine Abwasserpumpe 84 unterstützt insbesondere gegen Ende dieses Vorgangs das Ablassen des Abwassers. Das Sieb 86 verhindert, daß große Teigwarenstücke in den Auslaßkanal 78 gelangen können, während sich kleinere, das Sieb 86 durchdringende Stücke aufgrund des Überdrucks nicht in dem Auslaßkanal 78 festsetzen können.

Zum Abschrecken und Abkühlen der Teigwaren sowie zum Nachreinigen der Nachkochkammer wird außerdem Frischwasser zugeführt, das ebenfalls durch den Auslaßkanal 78 abgeführt wird. Im Anschluß daran öffnet das untere Verschlußelement 22, und die Teigwaren fallen auf einen bereit stehenden Teller.

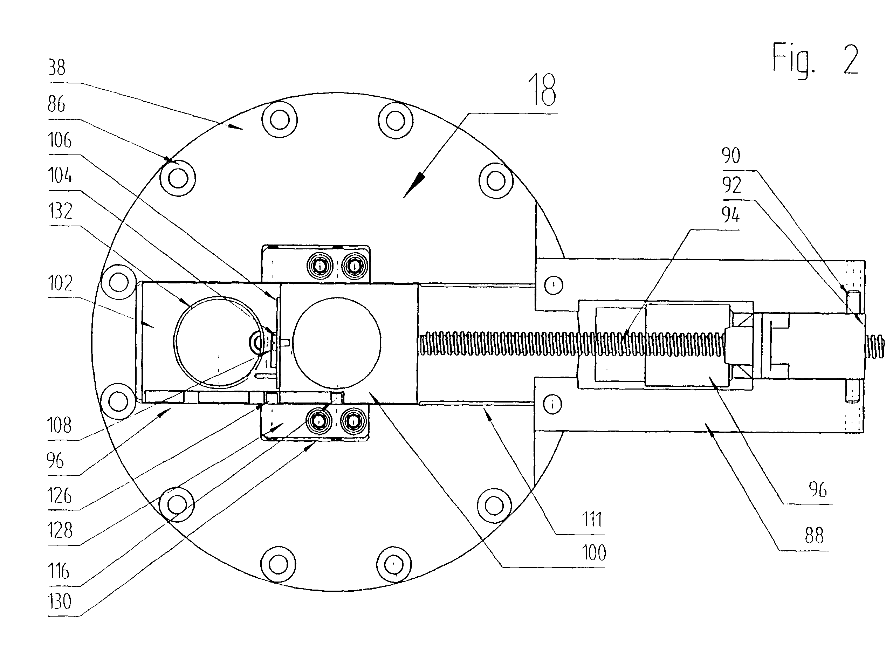

In Fig. 2 ist eine Draufsicht auf die Kochvorrichtung 10 im Bereich des Einlasses 24 der Hauptkochkammer mit dem Verschlußelement 18 gezeigt, das an dem oberen Teil 38 des Druckbehälters 12 montiert ist. Der obere Teil 38 ist mit mehreren Schrauben 86 in ringförmiger Anordnung mit dem mittleren Teil 40 des Druckbehälters 12 verschraubt. An dem oberen Teil 38 ist eine Halterung 88 angebracht, die über ein Gelenk 90 einen Spindeltrieb 92 mit einer axial verstellbaren Gewindespindel und einem angeflanschten elektrischen Antriebsmotor 95 schwenkbar aufnimmt.

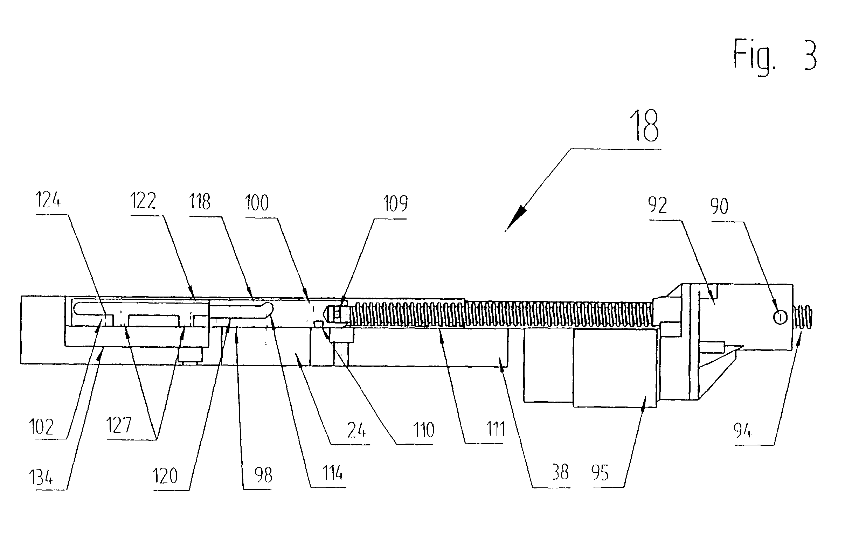

In der Oberseite des oberen Druckbehälterteils 38 ist eine Nut 96 eingearbeitet, in deren Grund 98 (siehe auch Fig. 3) die Einlaßöffnung 24 der Hauptkochkammer 14 vorgesehen ist. Das Verschlußelement 18 ist dabei in seiner Breite und Höhe den Abmessungen der Nut angepaßt, so daß sich ein im wesentlichen spielfreier Sitz in der Nut mit planflächig abschließenden Oberseiten zu dem oberen Druckbehälterteil 38 ergibt.

Das Verschlußelement 18 besteht im wesentlichen aus einem Anpreßkörper 100 und einem Reinigungskörper 102, die ein bestimmtes Höhenspiel zueinander aufweisen. Das Höhenspiel wird durch ein Langloch 104 in einer mit dem aus Teflon bestehenden Reinigungskörper 102 verschraubten Halteplatte 106 zugelassen, wobei ein durch das Langloch 104 ragende, in den Anpreßkörper 100 eingeschraubte Schraube 108 für den axialen Halt zwischen dem Anpreßkörper 100 und dem Reinigungskörper 102 sorgt.

Die Gewindespindel 94 nimmt über ein Gelenk 109 den Anpreßkörper 100 in axialer Richtung mit, wobei das Gelenk 109 ein gewisses Spiel in den übrigen Freiheitsgraden zuläßt. An der Unterseite des Anpreßkörpers 100 ist ein Dichtring 110 eingelassen, der in der Anpreßstellung mit dem Rand der Öffnung 24 zusammenwirkt und diese druckdicht verschließt. Flache Rampen 111 in den Ecken im hinteren Bereich der Nut 96 sorgen beim Zurückziehen des Anpreßkörpers 100 für dessen leichtes Anheben, so daß der Dichtring 110 nicht während des gesamten Verschiebeweges auf dem Grund 98 der Nut 96 reibt.

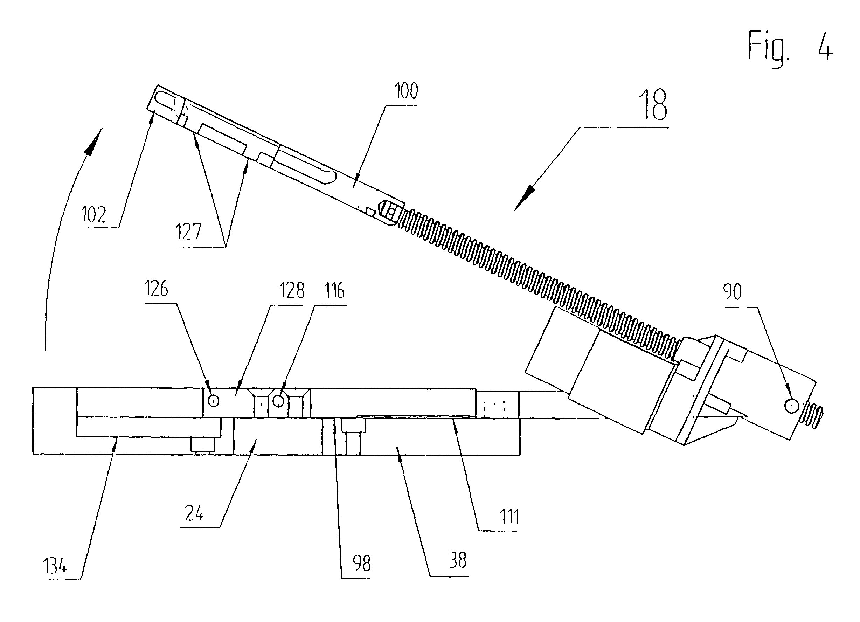

Die Anpreßwirkung des Anpreßkörpers 100 unter der Zustellkraft des Spindeltriebes 92 erreicht man durch beidseitig an dem Anpreßkörper 100 vorgesehene Schrägflächen 114, die gegen erste Rollen 116 an beiden Flanken der Nut 96 laufen. Die ersten Rollen 116 wirken im übrigen nicht mit dem Anpreßkörper 100 zusammen, dieser verfügt lediglich über obere Abdeckungen 118 und untere Abdeckungen 120, welche das Eindringen von Schmutz in den Bereich der Rollen verhindern. Auch an dem Reinigungskörper 102 sind obere Abdeckungen 122 vorgesehen, die in Verbindung mit unteren Lauf- oder Andruckflächen 124 für eine vollständige Kapselung der ersten Rollen 116 und von zweiten Rollen 126 sorgen, die in bestimmtem axialen Abstand zu den ersten Rollen 116 drehbar in Halteelementen 128 gelagert sind, die in Ausnehmungen 130 in dem oberen Druckbehälterteil 38 sitzen. Die Halteelemente 128 nehmen auch die ersten Rollen 116 auf. Die Andruckflächen 124 sind in solcher Höhe angeordnet, daß die Rollen 116, 126 einen leichten Anlagedruck des Reinigungskörpers 102 am Nutgrund aufbauen, wobei unter Umständen eine federnde Lagerung der Rollen 116, 126 vorgesehen sein kann, die das Erzeugen einer bestimmten Anlagekraft erleichtern. Der Federweg ist dann jedoch nur sehr begrenzt und wird beim Anlaufen der ersten Rollen 116 gegen die Schrägflächen schnell aufgezehrt, um den gewünschten hohen Anpreßdruck aufbauen zu können. Entsprechend dem Abstand zwischen den ersten Rollen 116 und den zweiten Rollen 126 sind in den Andruckflächen 124 des Reinigungskörpers 102 Öffnungen 127 vorgesehen, die ein Hochklappen des Verschlußelements 18 mit samt des Spindeltriebes 92 um das Gelenk 90 in die in Fig. 4 gezeigte Wartungsstellung erlauben.

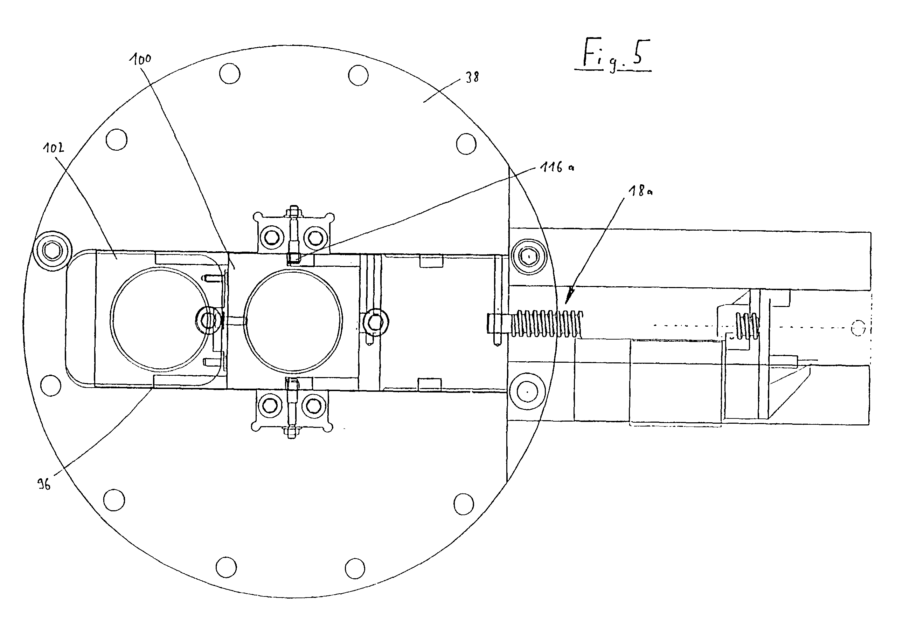

In Fig. 5 ist ein in seinem Aufbau sehr ähnliches Verschlußelement 18a dargestellt, bei welchem im Unterschied zu der in Fig. 3 und 4 gezeigten Ausführungsform lediglich eine Rolle 116a an jeder Flanke der Nut 96 vorgesehen ist. Eine derartige vereinfachte Ausführungsform kann für bestimmte Einsatzzwecke ausreichend sein.

Zum Beschicken der Hauptkochkammer 14 mit Teigwaren wird zunächst das Verschlußelement 18 in seine zurückgezogene Stellung verfahren, wobei der Anpreßkörper 100 leicht angehoben auf den Rampen 111 ruht und der Reinigungskörper 102 unter der Anpreßkraft der Rollen 116, 126 mit leichtem Anpreßdruck am Nutgrund 98 aufliegt, wobei eine in dem Reinigungskörper 102 vorgesehene Öffnung 132 fluchtend zu der Einlaßöffnung 24 mit gleichem Durchmesser liegt. Sobald die über dem Einlaß 24 befindliche Kammer 30 entleert ist, verschiebt der elektrische Antriebsmotor 95 über den Spindeltrieb 92 den Anpreßkörper 100 in die in Fig. 2 und 3 angedeutete Stellung, wobei die Schrägflächen 114 gegen die ersten Rollen 116 laufen, wodurch sich der notwendige Anpreßdruck des Dichtrings 110 an den Rand um die Öffnung 24 einstellt. Die Nut 26 ist innenseitig beschichtet, und auch der Anpreßkörper 100 kann eine Beschichtung aufweisen, um die Reibung bei seiner Verstellbewegung zu vermindern.

Während des Schließen des Verschlußelements 18 gleitet der Reinigungskörper 102 über den Nutgrund 98 im Bereich der Öffnung 24 und nimmt eventuelle Teigwarenreste mit, die sich in einer Vertiefung 134 am Ende der Nut 96 ansammeln können. Der Reinigungskörper 102 führt bei jedem Schließvorgang des Verschlußelements 18 einen Reinigungsvorgang durch und sorgt daher immer für eine saubere Dichtfläche, was neben der verbesserten Dichtwirkung auch eine längere Lebensdauer des Dichtrings 110 bewirkt. Für eine gründlichere Reinigung der Nut 96 und zum Reinigen der Vertiefung 134 kann das Verschlußelement 18 entsprechend Fig. 4 nach oben geklappt werden.

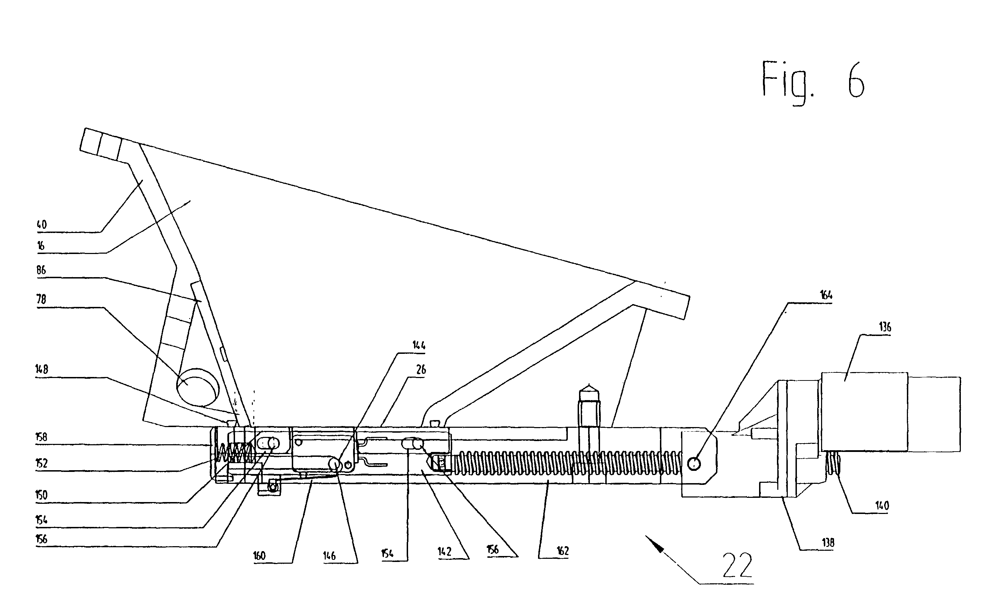

In Fig. 6 ist eine Schnittdarstellung des unteren Verschlußelements 22 dargestellt, das den Auslaß 26 am unteren Druckbehälterteil 44 verschließt. Das untere Verschlußelement 22 ist in seinem grundsätzlichen Aufbau dem oberen Verschlußelement 18 ähnlich ausgebildet und verfügt über einen von einem elektrischen Antriebsmotor 136 angetriebenen Spindeltrieb 138 mit einer axial verstellbaren Gewindespindel 140, die auf ein Druckelement 142 wirkt. Dieses verfügt über Schrägflächen 144, die mit seitlich an dem Druckbehälterteil 40 angeordneten Rollen 146 zusammenwirken, wobei allerdings das Druckelement 142 nicht unmittelbar gegen einen um den Auslaß 26 angeordneten Dichtring 148 in dem Druckbehälterteil 40 wirkt, sondern über eine Andruckplatte 150 als eigentlichem Schließelement. Diese Andruckplatte 150 ist bezüglich des Druckelements 142 axial gegen die Kraft einer Feder 152 beweglich, wobei die Andruckplatte 150 mit Hilfe von in Langlöchern 154 laufenden Führungsbolzen 156 an dem Druckelement 142 geführt ist.

Trifft die Andruckplatte 150 während eines Schließvorgangs mit einer Stirnfläche 158 auf einen Widerstand, verschiebt der Antrieb das Druckelement 142 relativ zur Andruckplatte 150, wodurch ein Positionsschalter 160 ausgelöst wird, der den elektrischen Antriebsmotor 136 anhält oder dessen Drehrichtung umkehrt. Die Empfindlichkeit dieser Abschaltung kann über die Feder 152 eingestellt werden, so daß bei im Vergleich zum Anpreßdruck der Andruckplatte 150 an den Dichtring 148 sehr geringen Widerständen eine Unterbrechung des Schließvorgangs eingeleitet werden kann.

Das untere Verschlußelement 22 verfügt ferner über eine Halterung 162, an welcher der Spindeltrieb 138 um ein Gelenk 164 schwenkbar gehalten ist und welche mit dem unteren Druckbehälterteil 40 verschraubt ist. Die Halterung 162 kann auch die Rollen 146 aufnehmen.

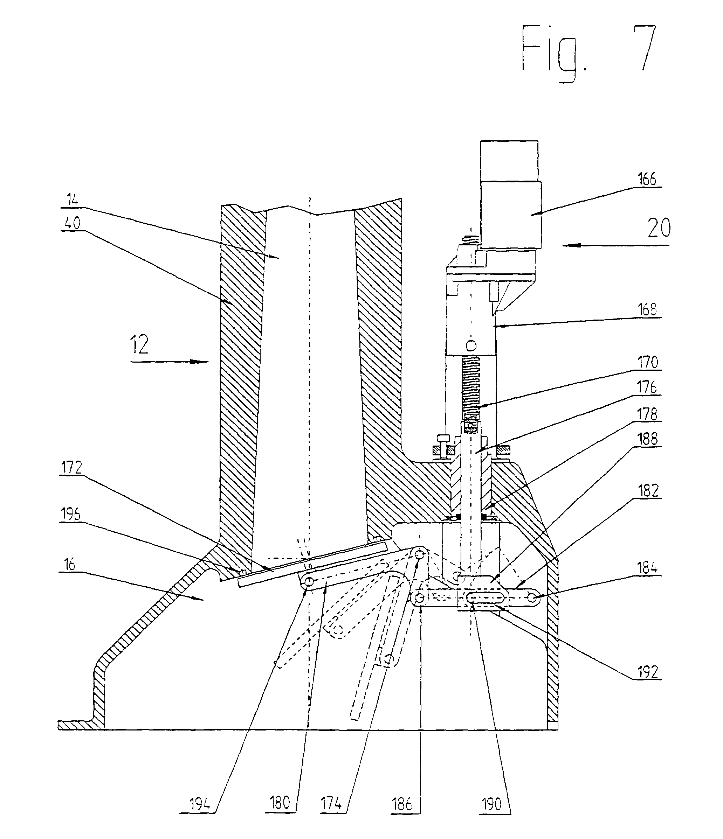

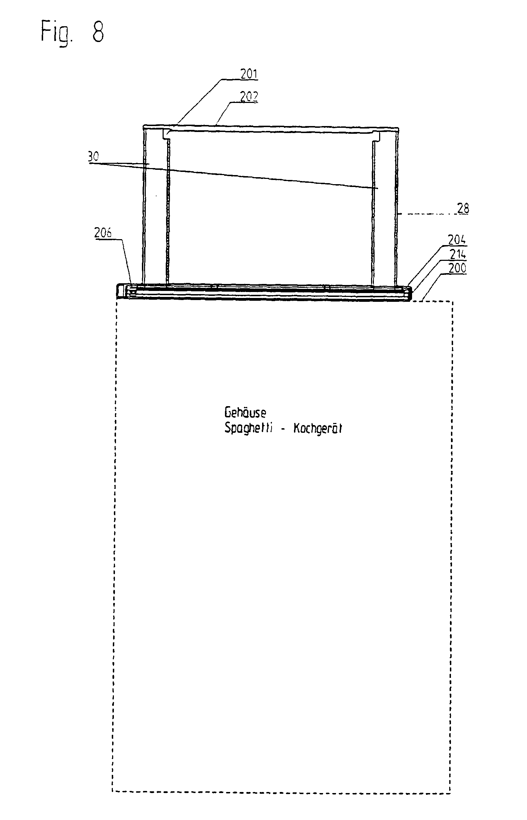

In Fig. 7 ist eine Schnittdarstellung des mittleren Verschlußelements 20 gezeigt, das wiederum über einen von einem Elektromotor 166 angetriebenen Spindeltrieb 168 mit einer axial verstellbaren Gewindespindel 170 aufweist. Da das eigentliche Schließelement 172, das um eine erste Gelenkachse 174 schwenkbar ist, im Inneren der Nachkochkammer 16 liegt, ist eine Schubstange 176 am Kopf der Gewindespindel 170 vorgesehen, welche die Stellbewegung in das Innere der Nachkochkammer 16 überträgt, wobei eine Dichtung 178 zur Abdichtung gegen den Mittelteil 40 des Druckbehälters 12 vorgesehen ist. Die Schwenkmechanik des Schließelements 172 besteht neben einem um die Gelenkachse 174 verschwenkbaren Schwenkhebel 180 aus einem Kniehebel 182, der um ein ortsfestes Gelenk 184 verschwenkbar ist und dessen freies Ende über ein Gelenk 186 auf den Schwenkhebel 180 wirkt. Die Schubstange 176 wirkt über ein Mitnehmerelement 188 auf ein Kniegelenk 190 des Kniehebels 182, wobei in dem Mitnehmerelement 188 ein quer zur Stellrichtung ausgerichtetes Langloch vorgesehen ist, das ein seitliches Ausweichen des Kniegelenks 190 beim Abklappen des Kniehebels 182 ermöglicht. Das Schließelement 172 ist über ein weiteres Gelenk 194 an dem Schwenkhebel 180 angelenkt, um eine gleichmäßige Anlage beim Schließen an einen gehäuseseitig vorgesehenen Dichtring 196 sicherzustellen. Durch den Kniehebel 182 wird ein variables Übersetzungsverhältnis erreicht, das im geöffneten Zustand des Schließeiements 172 eine schnelle Schwenkbewegung erlaubt und im Kontaktbereich des Schließelements 172 mit dem Dichtring 196 einen hohen Anpreßdruck möglich macht.

Die im Detail beschriebenen Baugruppen der Kochvorrichtung 10 sind neben dem Einsatz bei einer nach dem im Zusammenhang mit Fig. 1 beschriebenen Verfahren arbeitenden Kochvorrichtung auch einzeln oder in beliebiger Kombination bei an sich bekannten, nach dem Stand der Technik arbeitenden Vorrichtungen einsetzbar. Insbesondere können auch konstruktive Ausgestaltungen des unteren Verschlußelements 22 bei dem konstruktiv ähnlichen oberen Verschlußelement 18 und umgekehrt eingesetzt werden.

## Patentansprüche

1. Verfahren zum Kochen von Teigwaren in einer geeigneten Vorrichtung (10) mit einer Hauptkochkammer (14) und einer zweiten Kammer (16) sowie je einem Verschlußelement (18, 20, 22) an einem Einlaß (24) der Hauptkochkammer (14), zwischen der Hauptkochkammer (14) und der zweiten Kammer (16) und an einem Auslaß (26) der zweiten Kammer (16), wobei die Teigwaren in der Hauptkochkammer (14) mit unter Überdruck stehendem heißen Wasser gekocht werden, durch Öffnen einer Verbindung (64, 66) zwischen der unter Druck stehenden Hauptkochkammer (14) und der als Nachkochkammer arbeitenden zweiten Kammer (16) durch Druckausgleich ein Überdruck in der Nachkochkammer (16) aufgebaut wird, anschließend die Teigwaren in die zweite Kammer (16) gegeben und mit Hilfe des Überdrucks in der Nachkochkammer weitergekocht und nach dem Ablassen des Kochwassers ausgegeben werden, **dadurch gekennzeichnet, daß** der Überdruck in der Nachkochkammer (16) fortbesteht und nach dem Öffnen des Ablaßventils (80) das Kochwasser nach dem Nachkochen mit dem Überdruck in der Nachkochkammer (16) ausgetrieben wird.

2. Verfahren nach Anspruch 1, **dadurch gekennzeichnet, daß** vor dem Öffnen des mittleren Verschlußelements (20) mit Hilfe eines Ventils (66, 68) eine Verbindungsleitung (62) geöffnet wird, so daß der Druckausgleich zwischen der Hauptkochkammer und der Nebenkochkammer erfolgt.

3. Verfahren nach Anspruch 1 oder 2, **dadurch gekennzeichnet, daß** das ausgetriebene Kochwasser durch einen Wärmetauscher (31) geleitet wird, der Frischwasser erwärmt, welches für nachfolgende Kochzyklen zugeleitet wird.

4. Verfahren nach einem der Ansprüche 1 bis 3, **dadurch gekennzeichnet, daß** das zwischen der Hauptkoch- (14) und der Nachkochkammer (16) angeordnete Verschlußelement (20) mit Hilfe eines Antriebes (166) verschlossen wird, der vorzugsweise über einen Spindeltrieb (168, 170, 176, 188) auf das Kniegelenk (190) eines einseitig ortsfest angelenkten Kniehebels (182) wirkt, dessen freies Ende gelenkig mit einem Schließelement (172) verbunden ist, das vorzugsweise schwenkbar gelagert ist.

5. Verfahren nach Anspruch 4, **dadurch gekennzeichnet, daß** das freie Ende des Kniehebels (182) über ein Gelenk (186) auf einen Schwenkhebel (180) wirkt, an welchem das Schließelement (172) unmittelbar oder über ein weiteres Gelenk (194) angelenkt ist und/oder der Spindeltrieb (168, 170, 176) über ein Mitnehmerelement (188) mit einer im wesentlichen senkrecht zur Stellrichtung des Spindeltriebes ausgerichteten Langnut (192) auf das Kniegelenk (190) wirkt, wobei der Gelenkbolzen des Kniegelenks (182) in der Nut beweglich ist.

6. Verfahren nach einem der vorhergehenden Ansprüche, **dadurch gekennzeichnet, daß** das obere und/oder untere Verschlußelement (18, 20) mit Hilfe eines im wesentlichen quer zur betreffenden Öffnung (24, 26) der jeweiligen Kammer (14, 16) verfahrbaren Spindeltriebes (92, 94; 138, 140) und Umlenkelementen gegen den Öffnungsrand angepreßt wird und die Öffnung (24) der Hauptkochkammer (14) am Grund (98) einer Nut (96) ausgebildet ist, auf welchem das Verschlußelement (18) im gesamten Verfahrbereich gleitend aufliegt, wobei unter der Schublast des Spindeltriebes ein Anpreßdruck aufgebaut wird und dabei wenigstens eine an dem Verschlußelement (18, 100) vorgesehene Schrägfläche (114; 144) mit einem zugehörigen ortsfesten Element (116; 116a; 146) zusammenwirkt.

7. Verfahren nach Anspruch 6, **dadurch gekennzeichnet, daß** das Verschlußelement (18) zweiteilig ausgebildet ist und einen Anpreßkörper (100) und einen vorzugsweise einen aus Teflon bestehenden oder mit Teflon beschichteten Reinigungskörper (102) mit einer Öffnung (132) aufweist, deren Durchmesser im wesentlichen demjenigen der Öffnung (24) der Hauptkochkammer (14) entspricht, wobei in der geöffneten Stellung des Verschlußelements (18) die beiden Öffnungen (24, 132) fluchten.

8. Verfahren nach Anspruch 6, **dadurch gekennzeichnet, daß** zwei Schrägflächen (114; 144) an den Flanken des Verschlußelements (18, 100) vorgesehen sind, die mit in den Seitenwandungen der Nut (96) drehbar gelagerten Rollen (116; 116a; 146) zusammenwirken, wobei vorzugsweise der Reinigungskörper (102) mit bestimmtem Höhenspiel beweglich zu dem Anpreßkörper (100) angeordnet ist und mit Hilfe der vorzugsweise mit begrenztem Federweg nachgiebig gelagerten Rollen (116, 126; 116a) und Lauf-/Andruckflächen (124) an dem Reinigungskörper (102) eine definierte Anlage am Nutgrund (98) erreicht wird.

9. Vorrichtung nach einem der Ansprüche 6 bis 8, **dadurch gekennzeichnet, daß** der Reinigungskörper (102) beim Schließen des Verschlußelements (18) über eine Vertiefung geschoben wird, die in Schließrichtung hinter der Öffnung (24) in dem Nutgrund (98) vorgesehen ist.

10. Verfahren nach einem der Ansprüche 6 bis 9, **dadurch gekennzeichnet, daß** an dem Verschlußelement (18) Abdeckelemente (118, 120, 124) vorgesehen sind, die eine Kapselung für die Rollen (116, 126; 116a) und die Schrägflächen (114; 144) bilden, die Oberseiten des Verschlußelements (18) und die Oberseiten der Nutflanken flach ausgebildet sind und bündig miteinander abschließen und/oder das Verschlußelement (22) ein axial gegen eine Feder (152) bewegliches Schließelement (150) aufweist, das gegen die Öffnung (26) angepreßt wird, wobei mit Hilfe eines Schalters (160) bei einer Relativbewegung zwischen einem Druckelement (142), an welchem die Feder (152) abgestützt ist, und dem Schließelement (150) die Schließbewegung gestoppt oder umgekehrt wird.

## Claims

1. A method for cooking pasta products in a suitable device (10), having a main cooking chamber (14) and a second chamber (16), as well as closure elements (18, 20, 22) located respectively at an inlet (24) of the main cooking chamber (14), between the main cooking chamber (14) and the second chamber (16), and at an outlet (26) of the second chamber (16), wherein the pasta products are cooked in the main cooking chamber (14) by means of hot water under overpressure, wherein by means of a pressure compensation an overpressure is built up in the post-cooking chamber (16) by opening a connection (64, 66) between the main cooking chamber (14), which is pressurized, and the second chamber (16) operating as a post-cooking chamber, thereafter the pasta products are moved to the second chamber (16), continue to be cooked with the aid of the overpressure in the post-cooking chamber and are removed after the cooking water has been discharged, **characterized in that** the overpressure continues in the post-cooking chamber and, following the opening of the discharge valve (80), the cooking water is forced out at the end of post-cooking under overpressure in the post-cooking chamber (16).

2. The method in accordance with claim 1, **characterized in that** prior to opening the center closure element (20) with the aid of a valve (66, 68), a connecting line (62) is opened, so that the pressure compensation between the main cooking chamber and the auxiliary cooking chamber takes place.

3. The method in accordance with claim 1 or 2, **characterized in that** the forced out cooking water is conducted through a heat exchanger (31) which heats fresh water supplied for subsequent cooking cycles.

4. The method in accordance with one of claims 1 to 3, **characterized in that** closure element (20) arranged between the main cooking (14) and the post-cooking (16) chambers is closed with the aid of a drive mechanism (166), which acts, preferably via a spindle drive (168, 170, 176, 188), on the toggle joint (190) of a toggle lever (182), whose one side is stationarily hinged and whose free end is hingedly connected with a closure element (172), which is preferably pivotably seated.

5. The method in accordance with claim 4, **characterized in that** the free end of the toggle lever (182) acts via a link (186) on a pivot lever (180), on which the closure element (172) is hinged directly, or via a further link (194), and/or the spindle drive (168, 170, 176) acts on the toggle joint (190) via an engagement element (188) having a longitudinal groove (192), which is substantially oriented vertically in respect to the adjustment direction of the spindle drive, wherein the hinge bolt of the toggle joint (182) is movable in the groove.

6. The method in accordance with one of the preceding claims, **characterized in that** the upper and/or the lower closure element (18, 20) is pressed against the opening edge with the aid of a spindle drive (92, 94, 138, 140), which can be displaced substantially transversely in respect to the respective opening (24, 26) of the respective chamber (14, 16), and of deflection elements, and the opening (24) of the main cooking chamber (14) is embodied on the bottom (98) of a groove (96) on which the closure element (18) is slidingly seated over the entire process range, wherein a contact pressure is built up by means of the thrust load of the spindle drive, and at least one inclined face (114, 144) provided on the closure element (18, 100) acts together with an associated stationary element (116, 116a, 146).

7. The method in accordance with claim 6, **characterized in that** the closure element (18) is constructed of two parts and has a contact body (100) and a cleaning body (102), preferably made of Teflon or coated with Teflon, with an opening (132), whose diameter substantially matches the one of the opening (24) of the main cooking chamber (14), wherein the two openings (24, 132) are aligned in the open position of the closure element (18).

8. The method in accordance with claim 6, **characterized in that** two inclined faces (114, 144) are provided on the flanks of the closure element (18, 100), which act together with rollers (116, 116a, 146) which are rotatably seated in the lateral walls of the groove (96), wherein preferably the cleaning body (102) is arranged movable with a defined height play in respect to the contact body (100), and a defined contact with the groove bottom (98) can be achieved with the aid of the rollers (116, 126, 116a), which are preferably resiliently seated with limited spring travel, and running/contact faces (124) on the cleaning body (102).

9. The method in accordance with one of claims 6 to 8, **characterized in that** in the course of the closing of the closure element (18), the cleaning body (102) is pushed over a recess which is provided in the groove bottom (98) in the closing direction behind the opening (24).

10. The method in accordance with one of claims 6 to 9, **characterized in that** cover elements (118, 120, 124) are provided on the closure element (18), which constitute an encapsulation of the rollers (116, 126, 116a) and of the inclined faces (114, 144), the tops of the closure element (18) and the tops of the groove flanks are embodied to be flat and terminate flush against each other, and/or the closure element (22) has a movable closing element (150), which is axially movable against a spring (152) and is pressed against the opening (26), wherein in case of a relative movement between a pressure element (142), on which the spring (152) is supported, and the closing element (150), the closing movement is stopped or reversed by means of a switch (160).

## Revendications

1. Procédé de cuisson de pâtes alimentaires dans un dispositif approprié (10) comportant une chambre de cuisson principale (14) et une seconde chambre (16) ainsi que chaque fois un élément de fermeture (18, 20, 22) sur une entrée (24) de la chambre principale de cuisson (14) entre la chambre principale (14) et la seconde chambre (16), et sur une sortie (26) de la seconde chambre (16),
les pâtes alimentaires étant cuites dans la chambre principale de cuisson (14) avec de l'eau chaude sous pression, et ensuite étant introduites dans la seconde chambre (16) par l'ouverture d'une liaison (64, 66) entre la chambre principale (14) sous pression et la seconde chambre (16) fonctionnant comme chambre de fin de cuisson, par équilibrage de la pression en créant une surpression dans la chambre de fin de cuisson (16), leur cuisson se poursuivant avec la surpression dans la chambre de fin de cuisson jusqu'à ce que les pâtes soient sorties après évacuation de l'eau de cuisson,
**caractérisé en ce que**
la surpression subsiste dans la chambre de fin de cuisson (16), et l'eau de cuisson est expulsée après ouverture de la vanne d'évacuation (80), avec la surpression régnant dans la chambre de fin de cuisson (16) après la fin de cuisson.

2. Procédé selon la revendication 1,
**caractérisé en ce qu'**
avant d'ouvrir l'élément de fermeture intermédiaire (20), à l'aide d'une vanne (66, 68), on ouvre une conduite de liaison (62) pour équilibrer la pression entre la chambre principale et la chambre auxiliaire.

3. Procédé selon la revendication 1 ou 2,
**caractérisé en ce qu'**
on fait passer l'eau de cuisson expulsée à travers un échangeur de chaleur (31) qui réchauffe l'eau fraîche alimentant le cycle de cuisson suivant.

4. Procédé selon l'une des revendications 1 à 3,
**caractérisé en ce que**
l'élément de fermeture (20) installe entre la chambre principale (14) et la chambre auxiliaire (16) est fermé à l'aide d'un actionneur (166) agissant de préférence par l'intermédiaire d'un entraînement à broche (168, 170, 176, 188) sur l'articulation à genouillère (190) d'un levier à genouillère (182) dont une extrémité est articulée en un point fixe et dont l'extrémité libre est reliée de manière articulée à un élément de fermeture (172) monté de préférence pivotant.

5. Procédé selon la revendication 4,
**caractérisé en ce que**
l'extrémité libre du levier à genouillère (182) agit sur un levier pivotant (180) par l'intermédiaire d'une articulation (186), et l'élément de fermeture (172) est articulé directement ou par l'intermédiaire d'une autre articulation (194) à ce levier pivotant et/ou l'entraînement à broche (168, 170, 176) agit sur l'articulation à genouillère (190), par l'intermédiaire d'un élément d'entraînement (188) avec une rainure (192) alignée essentiellement perpendiculairement à la direction d'actionnement de l'entraînement à broche l'axe d'articulation de l'articulation à genouillère (182) étant mobile dans la rainure.

6. Procédé selon l'une des revendications précédentes,
**caractérisé en ce que**
l'élément de fermeture supérieur et/ou inférieur (18, 20) est pressé contre le bord de l'ouverture à l'aide d'un entraînement à broche (92, 94 ; 138, 140) mobile essentiellement transversalement à l'ouverture concernée (24, 26) de la chambre respective (14, 16), ct par des éléments de renvoi, l'ouverture (24) de la chambre principale (14) est réalisée au fond (98) d'une rainure (96), et l'élément de fermeture (18) s'applique en glissement dans toutc la plage de mobilité contre ce fond, la charge de poussée de l'entraînement à broche exerçant une pression d'application, et au moins une surface inclinée (114 ; 144), prévue sur l'élément de fermeture (18, 100), coopère avec un élément fixe correspondant (116; 116a ; 146).

7. Procédé selon la revendication 6,
**caractérisé en ce que**
l'élément, de fermeture (18) est réalisé cn deux parties et comporte un organe de pression (100) et un organe de nettoyage (102) de préférence en Téflon ou revétu de Téflon, qui comporte une ouverture (132) dont le diamètre correspond essentiellement à celui de l'ouverture (24) de la chambre principale (14), et les deux ouvertures (24, 132) sont alignées lorsque l'élément de fermeture (18) est en position d'ouverture.

8. Procédé selon la revendication 6,
**caractérisé en ce que**
les flancs de l'élément de fermeture (18, 100) comportent deux surfaces inclinées (114 ; 144), ces flancs coopérant avec des galets (116; 116a ; 146) montés à rotation dans les parois latérales de la rainure (96) et de préférence l'organe de nettoyage (102) est appliqué de manière mobile par rapport à l'organe de pression (100) avec un certain jeu en hauteur, alors que des galets (116, 126 ; 116a) montés de manière souple, de préférence avec une course de ressort limitée, et des surfaces de déplacement/d'application (124) contre l'organe de nettoyage (102), réalisent un appui défini contre le fond de rainure (98).

9. Procédé selon l'une des revendications 6 à 8,
**caractérisé en ce que**
l'organe de nettoyage (102), lors de la fermeture de l'élément de fermeture (18), glisse par-dessus une cavité prévue derrière l'ouverture (24) dans le fond de rainure (98) dans le sens de la fermeture.

10. Procédé selon l'une des revendications 6 à 9,
**caractérisé en ce que**
des éléments de recouvrement (118, 120, 124) prévus sur l'élément de fermeture (18), forment un encapsulage pour les galets 116, 126 ; 116a) et pour les surfaces inclinées (114 ; 144), la face supérieure de l'élément de fermeture (18) et les côtés supérieurs des flancs de rainure sont réalisés plats et se terminent à niveau les uns des autres et/ou l'élément de fermeture (22) comporte un élément de fermeture (150) mobile axialement contre un ressort (152), cet élément de fermeture (150) étant pressé contre l'ouverture (26), et à l'aide d'un commutateur (160) on arrête ou on inverse le mouvement de fermeture par un mouvement relatif entre un élément de pression (142) contre lequel s'appuie le ressort (152) et l'élément de fermeture (150).
